Europäisches Patentamt

European Patent Office

Office européen des brevets

(11) Publication number: **0 179 043**
A1

(12) **EUROPEAN PATENT APPLICATION**

(21) Application number: 85870139.4

(22) Date of filing: 14.10.85

(51) Int. Cl.⁴: **B 68 G 7/00**
A 47 C 3/16, A 47 C 7/20

(30) Priority: 16.10.84 BE 213839

(43) Date of publication of application:
23.04.86 Bulletin 86/17

(84) Designated Contracting States:
AT BE CH DE FR GB IT LI LU NL SE

(71) Applicant: "Velda", naamloze vennootschap
Weg naar Zwartberg 193
B-3660 Opglabbeek(BE)

(72) Inventor: Von Rudgisch, Edgar
Belvederestrasse 76
D-5000 Köln 41(DE)

(74) Representative: Pieraerts, Jacques et al,
Bureau Gevers S.A. rue de Livourne 7, Bte. 1
B-1050 Bruxelles(BE)

(54) Method for manufacturing furniture from foam, products obtained thereby, and mould used therewith.

㊳ There is described a method for covering sitting furniture with foam, which comprises first making inside an injection mould (1, 2), a foam cover, and slipping said cover over the reinforcing structure (armature) of the sitting furniture, and thereafter glueing those cover surfaces contacting one another together and locally with the sitting furniture reinforcing structure.

The invention further pertains to the foam cover used thereby and to a mould for the making thereof.

FIG. 4

## Method for manufacturing furniture from foam, products obtained thereby, and mould used therewith.

This invention relates to a method for manufacturing sitting, living and sleeping furniture from foam.

There is known a method for producing seats, settees and generally sitting furniture, whereby the reinforcing structure (armature) of the sitting furniture piece is arranged inside a jig or casting mould and the foam material based on polyurethan (cold-foaming method) or polyester (hot-foaming method) is injected between the outermost casting mould component and a core.

According to the presently-known method, each resulting element from such seats, settees or sitting furniture, comprises a reinforcing structure (skeleton) from wood, metal or some other suitable material. Said reinforcing structure has a disadvantageous influence on the foaming process. For instance removing from the jigs or moulds, the foam element with embedded structures requires a high force exertion and such an operation is nearly impossible without some damage. Moreover the raw foam product consumption is increased with such methods.

The invention has notably for object to provide a method whereby the most complex shapes may be removed from the jigs or moulds; the injection moulds have a relatively smaller opening and less covers for the withdrawing from the mould, whereby the mould strength and life duration is increased; without embedded components, the elements may be compressed and folded to a reduced volume; a foam material saving up to 25 to 40% may be expected, and whereby finally the conveying costs may be substantially lowered due to the smaller volume of the formed foam elements, without skeleton components incorporated therein.

To obtain this according to the invention, one first proceeds to making a foam cover inside an injection mould, and said cover is thereafter pulled, after foaming, over the suitable reinforcing structures of the intended sitting furniture piece, whereafter the mutually-contacting surfaces of said cover and structure are glued together locally.

The invention further pertains to foam covers manufactured according to said method and to the reinforcing structures provided therefor. The reinforcing structures for the various foam cover shapes may be standardized in this way, in other words one and the same structure may be used for a plurality of models.

Other details and features of the invention will stand out from the following description, given by way of non limitative example and with reference to the accompanying drawings, in which:

Figure 1 shows a seat whereby the dotted line shows the recess in the foam cover.

Figure 2 shows a seat whereby the dotted lines show the recess in the foam cover.

Figure 3 also pertains to a seat whereby the dotted lines show the recess.

Figure 4 is a front view of a foaming mould, while the casing is shown in cross-section for two possible shapes of one and the same foaming mould.

Figure 5 is a side view of a foaming mould, while the casing is shown in cross-section.

The method as shown in the above figures is characterized by the foaming or injecting in one piece, of a foam cover without reinforcing elements of any kind.

The foam cover which is removed without difficulty from a foaming mould, is then slipped over the reinforcing structure or skeleton of the sitting furniture. In the known sitting furniture, foam and reinforcing structure are fixedly connected to one another. With this invention, two discrete elements are provided:

1°) the foam cover, and

2°) a reinforcing structure or skeleton.

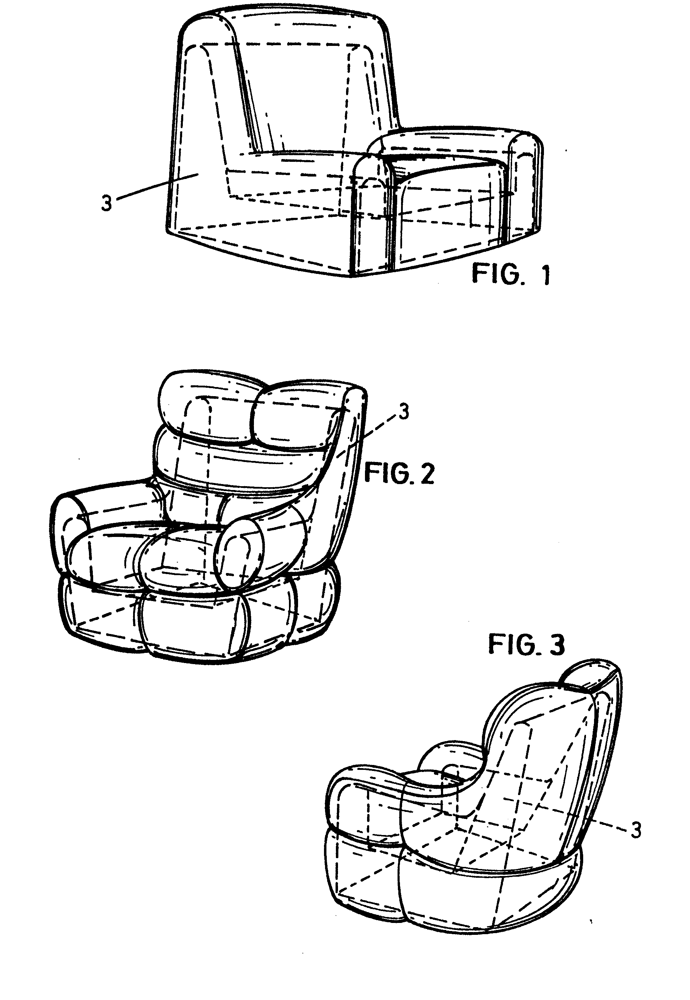

In figures 1, 2 and 3, there is clearly shown, drawn in dotted lines, the extent of the inner recess 3 which is intended to be slipped over the reinforcing structure or skeleton of the future sitting furniture and which is thereafter glued inwardly into an unit, on the surface areas provided therefor of said cover and structure.

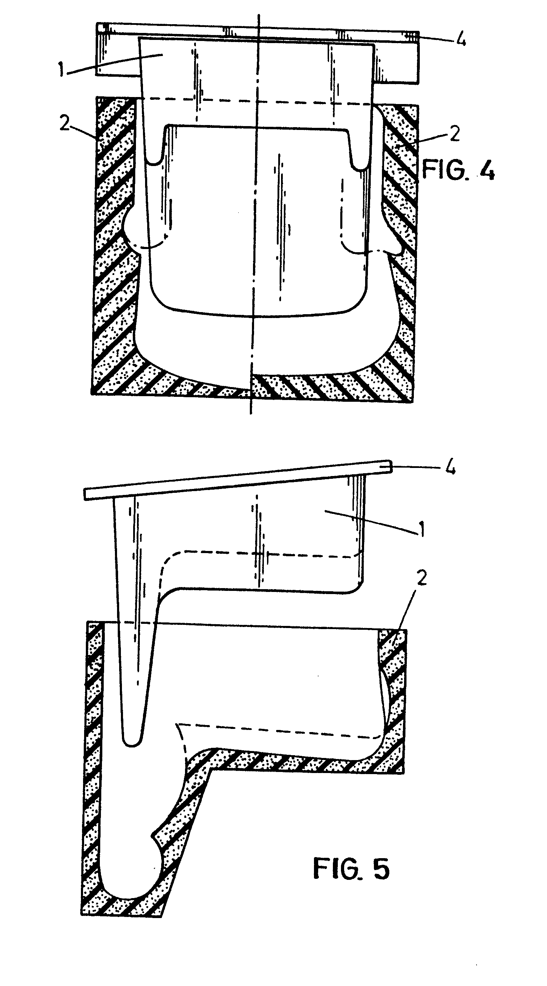

In figures 4 and 5, the core of a foaming jig or mould is shown with reference numeral 1, and the inner element of the foaming mould with reference numeral 2.

In both figures, the extent of the inner recess may be deduced from the shape of said core 1 and outer element 2. The shape of the foam cover does naturally correspond therewith.

No reinforcing structures are provided in the foam cover, in such a way that the shaping of the foam covers as well as the use thereof has very large advantages.

When making foaming jigs or moulds according to the known previous solid-foam method, it was required to have the opening or sealing edge of the mould correspond to the widest extent of the mould rounding, to make withdrawing from the mould possible. This is completely superfluous according to the present method.

As with solid-foam moulds, the sealing edge always has to lie in the location of the largest extent of said mould, and the sealing of said mould is not always insured to 100%, there did occur when foaming, flashes which had to be removed with much finishing work.

With the foaming according to the invention, of one-piece covers, the sealing edge of the mould may always be located along that side which corresponds to the bottom of the sitting element, which bottom generally forms the smallest extent of the foam part. The flash removal becomes thereby superfluous. Moreover there appears substantially no flash any more because the sealing edge has a smaller extent and the foaming mould becomes thereby stronger and may be closed more tigthly.

With the previous solid-foam method, the foaming mould had generally to be provided according to the kind and shape of the article to be injected, with a plurality of openings and covers. When manufacturing foam covers, the mould is always comprised of two parts, as it appears clearly from figures 4 and 5. Said parts are the core 1 with cover 4, and the outer element of the foaming mould, namely part 2.

When closing core 1 with cover 4 thereof, there is formed between core 1 and outer element 2 of the foaming mould, an inner space which may be filled with foam and wherefrom the foam cover results.

The foam cover which forms an unit, may then be slipped thereafter over the seat structure (or skeleton) and glued locally. The glueing may when necessary, also occur between the inner surfaces facing one another of the foam cover and the structure. The foam cover forms a homogeneous unit and the foam material as the foam covers are formed, is not slowed-down by other materials when rising inside the foaming mould, whereby a partial material saving is obtained.

With the solid foaming according to the previously-used methods, the inner structure first had to be secured inside the mould. These preliminary operations meant an

-5-                                                    0179043

additional time loss and were worktime-costly. When foaming covers, such operations become completely superfluous.

Due to the skin-forming of the foam, the foam cover is markedly stabilized.

Due to the foam distribution over a structure arranged inside the casting mould, according to the known methods, two materials always did contact one another at two different temperatures. The foam mixture has usually a temperature about $\pm$ 28°C, while the structure is at room temperature, that is $\pm$ 20°C. Said temperature differential does influence negatively the foam reaction. Foaming the covers without structure as provided according to the invention, does exclude such influence.

It must be understood that the invention is in no way limited to the above embodiments and that many changes may be brought thereto without departing from the scope of the invention as defined by the appended claims.

## CLAIMS

1. Method for covering sitting furniture with foam, which comprises first making inside an injection mould (1,2), a foam cover, and slipping said cover over the reinforcing structure (armature) of the sitting furniture, and thereafter glueing those cover surfaces contacting one another together and locally with the sitting furniture reinforcing structure.

2. Foam cover for the working of the method as defined in claim 1, which comprises inwardly no reinforcing elements, and is provided inwardly with a recess (3) which is fitted to the reinforcing structure of the sitting furniture.

3. Foam cover for the working of the method as defined in claim 1, which comprises inwardly no reinforcing elements, and which is provided inwardly with a recess (3) which is fitted to the reinforcing structure of a major component of said sitting furniture.

4. Sitting furniture provided with a foam cover as defined in either one of claims 2 and 3, with one or more standardized structure elements, in such a way that a foam cover may always be disengaged.

5. Two-part mould for forming a foam cover, which comprises an opening which is at the most equal to or is smaller than the largest dimension of the outer size of said foam cover, in such a way that said foam cover is moulded in one piece and has no flash.

6. Two-part mould as defined in claim 5, which is formed by an outermost casing (2) and a core (1) with cover (4) which define the hollow space wherein the material to be injected forms the foam cover.

3

FIG. 1

3

FIG. 2

FIG. 3

3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-A-2 726 141   (BUTZ)<br>* Page 16, middle of the 3rd paragraph; page  17, second half of the  1st paragraph; figures 1,3,4 * | 1-6 | B 68 G    7/00<br>A 47 C    3/16<br>A 47 C    7/20 |
| A | CH-A-  574 726   (BEKAERT)<br>----- | | |

TECHNICAL FIELDS SEARCHED (Int. Cl 4)

A 47 C
B 68 G

The present search report has been drawn up for all claims

| Place of search | Date of completion of the search | Examiner |
|---|---|---|
| THE HAGUE | 14-01-1986 | MARTIN A. |